Europäisches Patentamt

European Patent Office

Office européen des brevets

(11) Numéro de publication: **0 061 400 B1**

(12) **FASCICULE DE BREVET EUROPEEN**

(45) Date de publication du fascicule du brevet: **19.06.85**

(21) Numéro de dépôt: **82400502.9**

(22) Date de dépôt: **19.03.82**

(51) Int. Cl.⁴: **G 21 F 5/00, G 21 C 13/06**

(54) **Procédé et dispositif de fermeture étanche et d'ouverture d'un conteneur pour combustible nucléaire irradié.**

(30) Priorité: **20.03.81 FR 8105570**

(43) Date de publication de la demande:
**29.09.82 Bulletin 82/39**

(45) Mention de la délivrance du brevet:
**19.06.85 Bulletin 85/25**

(84) Etats contractants désignés:
**BE DE FR GB IT NL**

(56) Documents cités:
**FR-A-2 274 815
FR-A-2 315 624
FR-A-2 430 651
GB-A-1 084 319
US-A-3 997 078**

(73) Titulaire: **NOVATOME
20 Avenue Edouard Herriot
F-92350 Le Plessis Robinson (FR)**
(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Blaive, Daniel
12 route de Belleville
F-91190 Gif-sur-Yvette (FR)**
Inventeur: **Limouzin, Dominique
138 rue de Paris
F-92220 Bagneux (FR)**
Inventeur: **Veron, Bernard
Clair Village 2, rue Clément Marot
F-91600 Savigny-sur-Orge (FR)**

(74) Mandataire: **Mongrédien, André et al
c/o BREVATOME 25, rue de Ponthieu
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention est relative à un procédé et un dispositif de fermeture étanche et d'ouverture pour conteneurs destinés au transport des combustibles nucléaires qui sont à la fois source de radiations et source de chaleur.

La rupture du gainage renfermant le combustible nucléaire peut provoquer une surpression à l'intérieur du conteneur. Le dispositif de fermeture doit pouvoir résister à cette surpression.

Il existe de nombreux dispositifs de fermeture étanche amovible pour conteneurs comprenant une partie formant ouverture du conteneur et un bouchon venant s'adapter sur cette ouverture. L'étanchéité est réalisée au moyen d'un joint pressé entre le bouchon et l'ouverture. L'effort de compression du joint est souvent obtenu par un déplacement relatif de différentes pièces constituant le dispositif et qui coopèrent par l'intermédiaire de rampes usinées, de système à vis, etc. . .

Lorsque l'on veut obtenir des étanchéités très grandes on est amené à concevoir des bouchons capables d'exercer lors de la fermeture des efforts de compression sur le joint d'étanchéité relativement grands.

Lorsque, en plus le dispositif de fermeture est soumis à une température élevée, le joint d'étanchéité doit être métallique, or les joints métalliques ne fournissent une bonne étanchéité que lorsqu'ils sont soumis à des efforts de compression assez grands.

Ces critères d'étanchéité absolue sous température élevée sont ceux que l'on rencontre dans des conteneurs renfermant du combustible nucléaire qui est à la fois une source de radiations et une source de chaleur.

Les bouchons connus capables de remplir ces conditions présentent des structures compliquées nécessitant des usinages précis et une mise en place délicate. D'autre part, si ces bouchons sont exposés aux radiations, leurs surfaces contaminées présentent des aspérités, gorges ou recoins qui sont néfastes pour la sécurité ou la contrôle.

La présente invention vise à pallier ces inconvénients en proposant un procédé de fermeture étanche et d'ouverture d'un ensemble conteneur-bouchon pour combustible nucléaire irradié, le conteneur présentant une ouverture dont le bord supérieur a au moins une face interne cylindrique et le bouchon présentant une face externe cylindrique coopérant avec ladite face interne de l'ouverture du conteneur caractérisé en ce que la fermeture est réalisée par frettage à chaud du bord supérieur de l'ouverture du conteneur sur le bouchon et que l'ouverture est faite par chauffage rapide du bord supérieur de l'ouverture du conteneur suivi de l'extraction du bouchon.

Les moyens permettant le chauffage rapide du bord supérieur de l'ouverture du conteneur sont de préférence constitués par une bobine électromagnétique alimentée en courant alternatif entourant la face externe du bord supérieur.

Selon un mode de réalisation de notre invention, il est prévu sur la face cylindrique externe du bouchon, des gorges concentriques multipliant ainsi les zones effectives de contact de améliorant donc l'étanchéité lorsque le bouchon est en place.

Dans un tel dispositif de fermeture propre à notre invention nous remarquons que les pièces qui le constituent sont uniquement des pièces de révolution qui sont par conséquent très faciles à usiner.

D'autres avantages propres à cette invention apparaîtront lors de la description détaillée de l'exemple de réalisation qui va suivre, illustré par les figures annexées.

La figure 1 représente une vue schématique en coupe d'un dispositif de fermeture selon l'invention.

Les figures 2 et 3 représentent une vue partielle en coupe d'une réalisation du dispositif de fermeture selon l'invention.

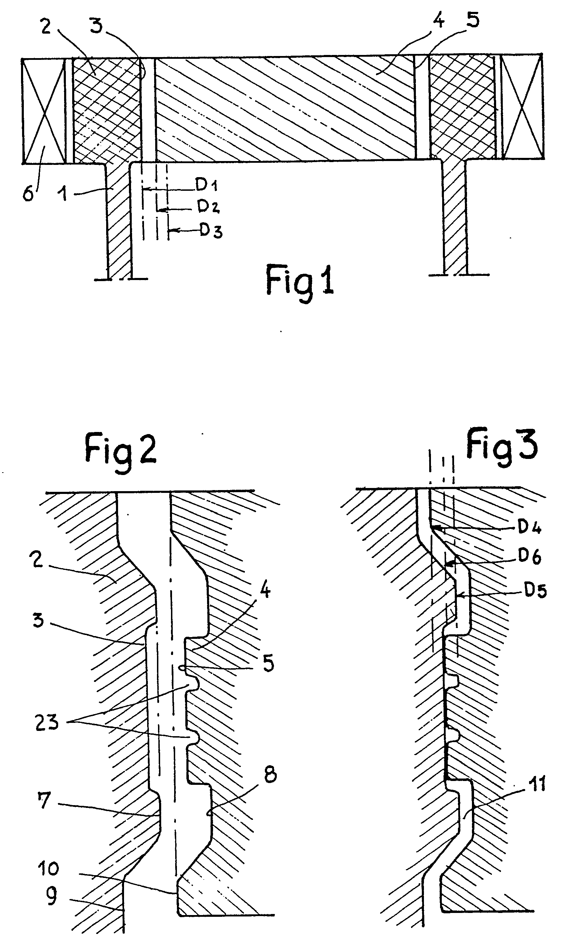

La figure 2 montre la disposition relative des pièces lors de l'opération de mise en place ou de l'extraction du bouchon.

La figure 3 montre la disposition de ces mêmes pièces lorsque le bouchon est en place.

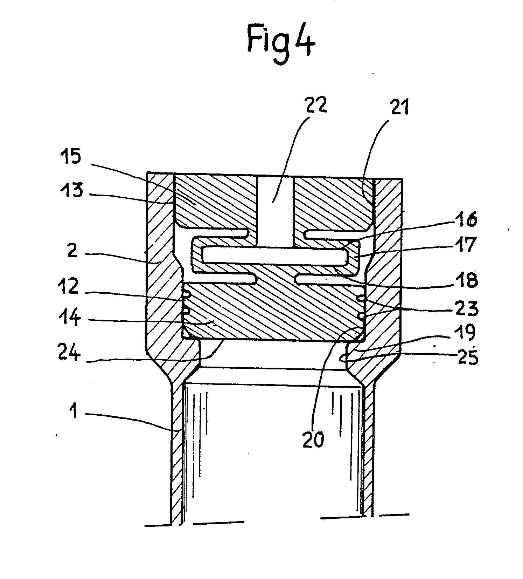

La figure 4 représente une vue en coupe d'un autre mode de réalisation du dispositif de fermeture selon l'invention.

Nous allons décrire le principe de fonctionnement du dispositif de fermeture propre à notre invention en ce reportant à la figure 1.

Un conteneur (non représenté) comporte une ouverture 1 de forme générale cylindrique. L'ouverture 1 comporte un bord supérieur 2 d'épaisseur plus importante et présentant une face interne cylindrique 3 de forme géométrique assez rigoureuse. Un bouchon 4 de forme générale cylindrique présente une face externe cylindrique 5 de forme géométrique assez rigoureuse. Le bouchon est destiné à venir se loger dans l'ouverture de façon que les faces cylindriques 3 et 5 soient pressées l'une contre l'autre afin de réaliser la fermeture étanche. Pour effectuer la mise en place du bouchon, on dispose autour du bord supérieur 2 de l'ouverture une bobine électromagnétique 6 alimentée en courant alternatif qui produit un échauffement rapide de la pièce 2 selon un processus bien connu. Il s'ensuit une dilatation qui amène le diamètre de sa face interne 3 à la valeur $D_1$. Le bouchon qui n'est pas chauffé a un diamètre $D_2$ légèrement inférieur au diamètre $D_1$, son introduction peut s'effectuer sans difficulté. Lorsque cette introduction est faite, on enlève la bobine ou on la déconnecte électriquement, il s'ensuit un refroidissement et un équilibre thermique entre les pièces 2 et 4. Comme la face 3 a un diamètre à froid $D_3$ inférieur à $D_2$, il se produit un frettage des pièces 2 et 4, les faces 3 et 5 sont pressées l'une contre l'autre énergiquement. Même si l'ensemble ainsi formé est ultérieurement chauffé, par example par les radiations des produits contenus, le bouchon et l'ouverture se dilatent simultanément, ce qui ne modifie pas beaucoup le frettage de ces deux pièces qui reste efficace pour réaliser l'étanchèité.

Pour effectuer l'ouverture du conteneur, il suffit de replacer la bobine alimentée autour de la pièce 2. On réalise ainsi un chauffage rapide et à effet superficiel de telle sorte que le chauffage ne concerne pratiquement que la pièce 2, le bouchon restant pratiquement froid.

Lorsque cela est rélisé, la pièce 2 est suffisamment dilatée pour créer un jeu entre les faces 3 et 5 et permettre l'extraction du bouchon sans effort.

Nous remarquons la simplicité de forme des pièces réalisant cette fermeture. D'autre part, les manoeuvres de mise en place ou d'extraction du bouchon se font sans effort, ce qui élimine des possibilités de fausse manoeuvre. La force avec laquelle les faces 3 et 5 sont pressées l'une contre l'autre est fonction uniquement des dimensions des pièces et de leur matière, elle est indépendante des manoeuvres effectuées, ce qui augmente la fiabilité de l'étanchéité réalisée.

Les figures 2 et 3 montrent une réalisation particulière du dispositif de fermeture propre à notre invention. Les faces cylindriques 3 et 5 sont les deux faces qui viennent en contact afin de réaliser l'étanchéité. De part et d'autre de la face 3 se trouvent un bossage circulaire 7 suivi d'un évidement circulaire 9, et de part et d'autre de la face 5 se trouvent un évidement circulaire 8 suivi d'un bossage circulaire 10. En position de fermeture (figure 3) correspondant à l'équilibre thermique, les faces 3 et 5 sont pressées l'une contre l'autre, et l'ensemble des bossages et des évidements 7, 8, 9 et 10 sont disposés de façon à laisser un léger espace 11 entre les pièces 2 et 4, le diamètre de cet espace 11 étant successivement inférieur puis supérieur au diamètre des faces 3 et 5 en contact. Cette disposition crée un obstacle efficace au déplacement axial du bouchon qui peut être dû par example à un choc externe ou une surpression interne.

On pourrait prévoir ainsi une multitude de bossages de d'évidements alternés créant un labyrinthe de part et d'autre des faces 3 et 5.

Ces bossages latéraux présentent aussi l'avantage de protéger des chocs ou rayures les faces 3 et 5 dont l'absence de défauts est essentielle pour créer l'étanchéité.

Lors de la mise en place ou de l'extraction du bouchon (figure 2) la dilatation de la pièce 2 doit être telle que le diamètre $D_5$ du bossage 7 soit supérieur au diamètre $D_4$ du bossage 10.

Dans le mode de réalisation correspondant aux figures 2 et 3, il est d'autre part prévu sur la face externe 5 du bouchon 4 des gorges 23 circulaires et concentriques destinées à améliorer l'étanchéité. En effet, si un défaut géométrique mineur existe sur l'une au moins des faces 3 ou 5, ou si le bouchon n'est pas disposé exactement dans l'axe de l'ouverture, le contact entre les faces 3 et 5 risque de ne s'effectuer qu'au voisinage d'une arête. La présence des gorges 23 diminue la rigidité superficielle du bouchon et permet une multiplication des zones de contacts entre les faces 3 et 5 par la multiplication des arêtes.

Un autre mode de réalisation du dispositif de fermeture selon notre invention est représenté en figure 4. Sur cette figure nous voyons l'ouverture 1 du conteneur présentant un bord supérieur 2 qui comporte deux faces internes cylindriques et concentriques 12, 13, la face 13 la plus extérieure ayant un diamètre supérieur à celui de la face 12. Le bouchon est composé essentiellement de deux pièces cylindriques coaxiales 14, 15 reliées de façon étanche par des voiles élastiques 16, 17, 18 formant soufflet. Le bouchon vient s'appuyer, lorsqu'il est introduit dans l'ouverture, sur un épaulement interne 19 de cette ouverture. Son positionnement est ainsi rigoureux.

Les pièces 14 et 15 ont leur face externe 20, 21 adaptées aux faces correspondantes 12, 13 de façon à ce que, lors de l'équilibre thermique il se réalise simultanément un frettage. L'étanchéite est donc double dans ce dispositif. La liaison élastique 16, 17, 18 permet d'absorber les déplacements selon l'axe des pièces 14 et 15 lors des variations de température afin d'éviter des glissements entre les différentes surfaces en contact réalisant l'étanchéite. Un évidement 22 est prévu dans la partie 15 du bouchon afin de permettre sa préhension sans que ce bouchon ne présente de protubérence qui risquerait de l'exposer aux chocs.

Pour tous les modes de réalisation conforme à la présente invention il peut être utile de prévoir sur les faces cylindriques venant en contact afin de réaliser l'étanchéité un revêtement métallique dont la dureté est inférieure à celle des matériaux constituant le bouchon et l'ouverture. Ce revêtement peut être composé de nickel chimique.

Le dispositif de fermeture propre à notre invention a d'autre part l'avantage, lorsqu'il est utilisé pour des conteneurs renfermant des produits radioactifs, d'avoir des surfaces pouvant être contaminées qui sont très restreintes et qui présentent un aspect lisse sans relief ni cavité.

## Revendications

1. Procédé de fermeture étanche et d'ouverture d'un ensemble conteneur-bouchon pour combustible nucléaire irradié, le conteneur présentant une ouverture dont le bord supérieur a au moins une face interne cylindrique et le bouchon présentant une face externe cylindrique coopérant avec ladite face interne de l'ouverture du conteneur, caractérisé en ce que la fermeture est réalisée par frettage à chaud du bord supérieur de l'ouverture du conteneur sur le bouchon et que l'ouverture est obtenue par chauffage rapide du bord supérieur de l'ouverture du conteneur suivi de l'extraction du bouchon.

2. Procédé selon la revendication 1, caractérisé en ce que la chauffage du bord supérieur de l'ouverture du conteneur est réalisé au moyen d'une bobin électromagnétique alimentée en courant alternatif entourant la face externe du bord supérieur.

3. Ensemble conteneur du combustible nucléaire irradié avec bouchon destiné à la mise en oeuvre du procédé selon l'une des revendications 1 et 2, le conteneur présentant une ouverture (1) dont le bord supérieur (2) a une face interne cylindrique (3) et le bouchon (4) présentant une face externe cylindrique (5), ensemble caractérisé en ce que la diamètre $(D_2)$ de la face externe du bouchon séparé du conteneur est, à température égale, légèrement supérieur à celui $(D_3)$ de la face interne du bord supérieur de l'ouverture, de sorte qui la fermeture soit réalisée par frettage à chaud du bord supérieur de l'ouverture du conteneur sur le bouchon.

4. Ensemble selon la revendication 3 caractérisé en ce que le bouchon est formé de deux parties (14, 15) concentriques, reliées par un voile flexible étanche (16, 17, 18), les deux parties (14, 15) ayant des faces externes cylindriques (20, 21) venant s'emboîter chacune dans deux logements distincts concentriques de l'ouverture (2) sur des faces internes cylindriques correspondantes (12, 13), et en ce que la partie (15) du bouchon la plus extérieure présente un orifice interne (22) débouchant dans la zone du voile (16) et destiné à la préhension du bouchon.

5. Ensemble selon l'une des revendications 3 ou 4, caractérisé en ce que la face ou l'une des faces externes cylindriques du bouchon présente au moins une gorge concentrique permettant d'améliorer le contact de cette face avec la face correspondante de l'ouverture.

6. Ensemble selon l'une quelconque des revendications 3 à 5 caractérisé en ce que de part et d'autre des faces internes de l'ouverture et externes du bouchon, sont ménagés une suite de bossages et d'évidements circulaires et concentriques à ces faces, un bossage sur l'une des pièces se trouvant en regard d'un évidement sur l'autre pièce et vice-versa, de façon qu'il soit créé un obstacle au déplacement axial du bouchon par rapport à l'ouverture de chaque côte des faces en contact créant l'étanchéite.

7. Ensemble selon l'une quelconque des revendications 3 à 6 caractérisé en ce que les faces en contact créant l'étanchéite sont recouvertes d'une couche métallique dont la dureté est inférieure à celle des pièces du dispositif.

**Patentansprüche**

1. Verfahren zum dichtfesten Verschliessen und Öffnen eines Stopfen-Containersystems für bestrahlte Kernspaltstoffe, wobei der Container eine Öffnung aufweist, bei welcher der Oberrand mindestens eine zylindrische Innenfläche und der Stopfen eine zylindrische Aussenfläche umfasst, die mit dieser Innenfläche der Containeröffnung zusammenwirkt, dadurch gekennzeichnet, dass das Verschliessen durch Warmaufschrumpfen des Oberrandes der Containeröffnung auf den Stopfen realisiert wird, und dass das Öffnen durch Schnellaufwärmen des Oberrandes der Containeröffnung mit nachfolgender Herausnahme des Stopfens erzielt wird.

2. Verfahren nach Anspruch 1, dadurch gekennzeichnet, dass das Aufwärmen der Oberrandes der Containeröffnung mit Hilfe einer die Aussenfläche des Oberrandes umgebenden mit Wechselstrom gespeisten elektromagnetischen Spule erfolgt.

3. Containersystem mit Stopfen für bestrahlte Kernspaltstoffe zur Anwendung des Verfahrens nach einem der Ansprüche 1 und 2, bei welchem der Container eine Öffnung (1) aufweist wobei deren Oberrand (2) eine zylindrische Innenfläche (3) und der Stopfen (4) eine zylindrische Aussenfläche (5) umfasst, dadurch gekennzeichnet, dass der Durchmesser $(D_2)$ der Aussenfläche des von dem Container getrennten Stopfens bei gleicher Temperatur etwas grösser ist als der Durchmesser $(D_3)$ der Innenflächen des oberen Öffnungsrandes, so dass das verschliessen durch Warmaufschrumpfen des Oberrandes der Containeröffnung auf den Stopfen erfolgt.

4. System nach Anspruch 3, dadurch gekennzeichnet, dass der Stopfen aus zwei konzentrische durch ein dünnes und elastisches Dichtungsstück (16, 17, 18) verbundene Teile (14, 15) gebildet ist, wobei die beiden Teile (14, 15) zylindrische Aussenflächen (20, 21) aufweisen, die jeweils auf entsprechende zylindrische Innenflächen (12, 13) in zwei getrennte konzentrische Aufnahmen der Öffnung (2) gesteckt werden, und dass das äusserste Teil (15) des Stopfens eine zum Festhalten des Stopfens in den Bereich des Dichtungsstückes (16) mündende Innenöffnung (22) aufweist.

5. System nach einem der Ansprüche 3 oder 4, dadurch gekennzeichnet, dass die Fläche oder eine der zylindrischen Aussenflächen des Stopfens mindestens eine konzentrische Vertiefung aufweist, wodurch der Kontakt dieser Fläche mit der entsprechenden Fläche der Öffnung verbessert wird.

6. System nach einem der vorhergehenden Ansprüche 3 bis 5, dadurch gekennzeichnet, dass beiderseits der Innenflächen der Öffnung und der Aussenflächen des Stopfens kreisförmige zu diesen Fläche konzentrische Vorsprünge und Aussparungen nacheinander angeordnet sind, wobei ein Vorsprung auf einem dieser Teile einer Aussparung auf dem anderen Teil gegenüberleigt und umgekehrt, um somit an jeder Seite der dichtenden in Kontakt befindlichen Flächen die Axialbewegung des Stopfens zur Öffnung zu verhindern.

7. System nach einem der Ansprüche 3 bis 6, dadurch gekennzeichnet, dass die dichtenden im Kontakt befindlichen Flächen mit einer Metallschicht bedeckt sind, wobei deren Härte niedriger ist als diejenige der Teile des Systems.

**Claims**

1. Process for a leak-tight closing and opening of a container-plug assembly for irradiated nuclear fuel, the container having an opening the upper edge of which has at least one cylindrical inner face, and the plug having a cylindrical outer face cooperating with the said inner face of the container opening, characterised in that the closure is produced by heat-shrinking the upper edge of the container opening over the plug and that the opening is produced by rapid heating of the upper edge of the container opening followed by withdrawal of the plug.

2. Process according to Claim 1, characterised in that the heating of the upper edge of the container opening is produced by means of an electromagnetic coil supplied with alternating current surrounding the outer face of the upper edge.

3. Container assembly for irradiated nuclear fuel with a plug intended for the use of the process according to either of Claims 1 and 2, the container having an opening (1) the upper edge (2) of which has a cylindrical inner face (3) and the plug (4) having a cylindrical outer face (5), an assembly characterised in that the diameter ($D_2$) of the outer face of the plug, separated from the container, is, at an equal temperature, slightly greater than that ($D_3$) of the inner face of the upper edge of the opening, so that the closure is produced by heat-shrinking of the upper edge of the container opening over the plug.

4. Assembly according to Claim 3, characterised in that the plug consists of two concentric parts (14, 15) connected by a flexible leak-tight web (16, 17, 18), the two parts (14, 15) having cylindrical outer faces (20, 21) each of which fits into two separate concentric housings of the opening (2) on corresponding cylindrical inner faces (12, 13), and the outermost part (15) of the plug has an inner orifice (22) opening out into the web zone (16) and intended for grasping the plug.

5. Assembly according to either of Claims 3 or 4, characterised in that the face or one of the cylindrical outer faces of the plug has at least one concentric groove making it possible to improve the contact between this face and the corresponding face of the opening.

6. Assembly according to any one of Claims 3 to 5, characterised in that on either side of the inner faces of the opening and the outer faces of the plug a series of circular projections and hollows, concentric with these faces, is provided, a projection on one of the members facing a hollow on the other member and vice-versa, so that an obstacle is produced to the axial movement of the plug relative to the opening on each side of the faces in contact producing the leak-tight sealing.

7. Assembly according to any one of Claims 3 to 6, characterised in that the faces in contact producing the leak-tight sealing are covered with a metal layer the hardness of which is lower than that of the components of the device.

Fig 1

Fig 2

Fig 3

# Fig 4